# EUROPEAN PATENT APPLICATION

(11) **EP 1 802 057 A1**
(43) Date of publication of application: **27.06.2007**
(21) Application number: 05782015.1
(22) Date of filing: 09.09.2005
(51) Int. Cl.: H04L 12/66, G06F 13/00

(54) **REPEATER, REPEATING METHOD, REPEATING PROGRAM, NETWORK ATTACK DEFENSING SYSTEM**

(30) Priority: 12.10.2004 JP 2004298246
(71) Applicant: NIPPON TELEGRAPH AND TELEPHONE CORPORATION, Tokyo 100-8116 (JP)
(72) Inventor: SEBAYASHI, Katsuhiro NTT Intellectual Property Ctr, Musashino-shi, Tokyo 1808585 (JP); KURAKAMI, Hiroshi NTT Intellectual Property Center, Musashino-shi, Tokyo 1808585 (JP); SOEJIMA, Yuji, NTT Intellectual Property Center, Musashino-shi, Tokyo 1808585 (JP); CHEN, Eric, NTT Intellectual Property Center, Musashino-shi, Tokyo 1808585 (JP); FUJI, Hitoshi, NTT Intellectual Property Center, Musashino-shi, Tokyo 1808585 (JP)
(74) Representative: HOFFMANN EITLE
(86) International application number: PCT/JP2005/016666
(87) International publication number: WO 2006/040895

(57) **Abstract**

In registering signatures (suspicious signatures, legitimate signatures, illegitimate signatures) in a signature list, a repeater device 10 determines priority orders of the signatures to be registered from a standpoint of making set signatures be higher in priority than automatically generated signatures. In controlling the passage of a packet, the repeater device 10 selects a signature in the order of high priority order (priority) from among the signatures registered in the signature list, judges whether the packet corresponds to the selected signature, and controls the packet based on the corresponding signature.

## Description

### TECHNICAL FIELD

The present invention relates to a repeater device, a relaying method, a relaying program, and a network attack protection system that control the passage of packets along a network based on signatures for controlling the passage of the packets.

### BACKGROUND ART

Network attack protection systems that have a plurality of repeater devices arranged in a network to which computers that are to be protected are connected and protect the computers receiving DoS (Denial of Service) attacks or DDoS (Distributed Denial of Service) attacks are known from before. For example, with a network attack protection system disclosed in Patent Document 1 (Japanese Published Unexamined Patent Application No. 2003-283554), whether communication traffic matches predetermined conditions for detecting suspicious attacking packets is checked at a repeater device. When matching traffic is detected, the repeater device generates a suspicious signature for identifying the detected suspicious attacking packet, sends the suspicious signature to repeater devices on upstream side, and thereafter performs a process of restricting the transmission band of suspicious attacking packets identified by the suspicious signature.

An upstream repeater device or a downstream repeater device is a repeater device that is adjacent (hereinafter, "adjacent repeater device") and on an upstream side or on a downstream side of the target repeater device. The upstream or the downstream is with respect to the direction in which a suspicious attacking packet flows. In the above arrangement, the repeater device that receives the suspicious signature sends the suspicious signature received from the downstream repeater device to upstream repeater devices and performs the process of restricting the transmission band of suspicious attacking packets identified by the suspicious signature.

Also, the conventional repeater device sends legitimacy conditions, which specify communication packets that are sent from communications terminals used by legitimate users (the conditions of legitimate packets that are not deemed to be attack packets), to upstream repeater devices and generates, based on the legitimacy conditions and the suspicious signature, legitimate signatures for identifying legitimate packets, and thereafter performs a process of canceling the transmission band restriction for legitimate packets identified by the legitimate signatures. Furthermore, a repeater device that has received the legitimacy conditions sends the received legitimacy conditions to upstream repeater devices, generates legitimate signatures based on the legitimacy conditions and the suspicious signature, and thereafter performs the process of canceling the transmission band restriction for legitimate packets identified by the legitimate signatures.

The conventional repeater device thus performs the process of restricting the transmission bands of suspicious attacking packets and the process of canceling transmission band restrictions of legitimate packets, and these processes are carried out by a filtering unit. That is, the filtering unit of the repeater device places a packet, which is found to match a legitimate signature in a conditional judging process based on legitimate signatures, in a predetermined cue and thereafter performs a conditional judging process based on suspicious signatures on a packet that is found not to match any legitimate signature.

Patent Document 1: Japanese Published Unexamined Patent Application No. 2003-283554

### DISCLOSURE OF INVENTION

### PROBLEM TO BE SOLVED BY THE INVENTION

However, with the conventional art, because the conditional judging process based on legitimate signatures and the conditional judging process based on suspicious signatures are performed in a fixed, predetermined order in the repeater device, a packet cannot be processed in a desired processing order that is desirable in a network attack protection system.

The present invention has been made to resolve the above issue of the conventional art and an object thereof is to provide a repeater device, a relaying method, a relaying program, and a network attack protection system that can process a packet according to a desired order when there are a plurality of signatures.

### MEANS FOR SOLVING PROBLEM

To solve the above problems and to achieve the above objects, a repeater device that is arranged in a network and includes a signature storage unit that stores signatures for controlling a passage of packets, and controls the passage of the packets based on the signatures stored in the signature storage unit includes a priority order determining and providing unit that determines the priority orders of the signatures to be stored in the signature storage unit; and a packet controlling unit that selects a signature from the signature storage unit in the order of high priority order as determined by the priority order determining unit and controls the passage of the packet based on selected signature.

According to the invention in claim 2, in the above invention, the signature storage unit stores automatically generated signatures that are generated automatically according to predetermined conditional judgments and set signatures set by a manager of the network, and the priority order determining unit provides priority orders to the automatically generated signatures and the set signatures to be stored in the signature storage unit with the set signatures being provided with higher priority orders than the automatically generated signatures.

According to the invention in claim 3, in the above invention, the signature storage unit stores a plurality of signatures for restricting the passage of the packets within predetermined ranges, and the priority order determining unit provides priority orders to the signatures to be stored in the signature storage unit with higher priority orders being provided to signatures of more stringent restriction ranges.

According to the invention in claim 4, in the above invention, the repeater device further comprises a suspicious signature generating unit that detects a suspicious attacking packet based on predetermined suspicious attack detection conditions and generates a suspicious signature for restricting the suspicious attacking packet, and wherein, when a suspicious signature is generated by the suspicious signature generating unit, the priority order determining unit stores the suspicious signature in the signature storage unit upon providing a priority order to the suspicious signature.

According to the invention in claim 5, in the above invention, the repeater device further comprises a legitimate signature generating unit that generates legitimate signatures for enabling valid packets based on predetermined legitimacy conditions; and wherein, when a legitimate signature is generated by the legitimate signature generating unit, the priority order determining unit stores the legitimate signature in the signature storage unit upon providing a priority order to the legitimate signature.

According to the invention in claim 6, in the above invention, the repeater device further comprises an illegitimate signature generating unit that detects an illegitimate packet based on predetermined illegitimate traffic detection conditions and generates an illegitimate signature for restricting the illegitimate packet; and wherein, when an illegitimate signature is generated by the illegitimate signature generating unit, the priority order determining unit stores the illegitimate signature in the signature storage unit upon providing a priority order to the illegitimate signature.

According to the invention in claim 7, in the above invention, the repeater device further comprises a signature receiving unit that receives suspicious signatures, for restricting suspicious attacking packets, from other repeater devices; and wherein, when a suspicious signature is received by the signature generating unit, the priority order determining unit stores the suspicious signature in the signature storage unit upon providing a priority order to the suspicious signature.

According to the invention in claim 8, in the above invention, the repeater device further comprises a legitimate signature generating unit that generates legitimate signatures for enabling valid packets based on predetermined legitimacy conditions received from the other repeater devices; and wherein, when a legitimate signature is generated by the legitimate signature generating unit, the priority order determining unit stores the legitimate signature in the signature storage unit upon providing a priority order to the legitimate signature.

According to the invention in claim 9, in the above invention, the repeater device further comprises a signature input unit that receives and inputs signatures from a network manager; and wherein, when a signature is input by the signature input unit, the priority order determining unit stores the signature in the signature storage unit upon providing a priority order to the signature.

According to the invention in claim 10, a network attack protection system that includes a signature storage unit that stores signatures for controlling a passage of packets, and controls the passage of the packets based on the signatures stored in the signature storage unit includes a priority order determining and providing unit that determines the priority orders of the signatures to be stored in the signature storage unit; and a packet controlling unit that selects a signature from the signature storage unit in the order of high priority order as determined by the priority order determining unit and controls the passage of the packet based on selected signature.

According to the invention in claim 11, a relaying method realized on a device that is arranged in a network and that includes a signature storage unit that stores signatures for controlling a passage of packets, and controls the passage of the packets based on the signatures stored in the signature storage unit includes a priority order determining and providing unit step of determining the priority orders of the signatures to be stored in the signature storage unit; and a packet controlling step of selecting a signature from the signature storage unit in the order of high priority order as determined by the priority order determining unit and controls the passage of the packet based on selected signature.

According to the invention in claim 12, in the above invention, the signature storage unit stores automatically generated signatures that are generated automatically according to predetermined conditional judgments and set signatures set by a manager of the network, and the priority order determining step includes providing priority orders to the automatically generated signatures and the set signatures to be stored in the signature storage unit with the set signatures being provided with higher priority orders than the automatically generated signatures.

According to the invention in claim 13, in the above invention, the signature storage unit stores a plurality of signatures for restricting the passage of the packets within predetermined ranges, and the priority order determining step includes providing priority orders to the signatures to be stored in the signature storage unit with higher priority orders being provided to signatures of more stringent restriction ranges.

According to the invention in claim 14, relaying program that causes a signature storage unit to store signatures for controlling a passage of packets, and controls the passage of the packets based on the signatures stored in the signature storage unit includes a priority order determining and providing unit process of determining the priority orders of the signatures to be stored in the signature storage unit; and a packet controlling process of selecting a signature from the signature storage unit in the order of high priority order as determined by the priority order determining unit and controls the passage of the packet based on selected signature.

According to the invention in claim 15, in the above invention, the signature storage unit stores automatically generated signatures that are generated automatically according to predetermined conditional judgments and set signatures set by a manager of the network, and the priority order determining step includes providing priority orders to the automatically generated signatures and the set signatures to be stored in the signature storage unit with the set signatures being provided with higher priority orders than the automatically generated signatures.

According to the invention in claim 16, in the above invention, the signature storage unit stores a plurality of signatures for restricting the passage of the packets within predetermined ranges, and the priority order determining step includes providing priority orders to the signatures to be stored in the signature storage unit with higher priority orders being provided to signatures of more stringent restriction ranges.

### EFFECT OF THE INVENTION

With the invention of claim 1, 10, 11, or 14, because the priority orders of the signatures stored in the signature storage unit are determined, a signatures is selected in the order of high priority order, and the passage of a packet is controlled based on the selected signature, a packet can be processed according to a desired order when there are a plurality of signatures.

With the invention of claim 2, 12, or 15, because the set signatures are provided with higher priority orders than the automatically generated signatures, the set signatures set by the network manager are used with priority in the control of packets, thus enabling control intended by the network manager to be performed with priority.

With the invention of claim 3, 13, or 16, because, among signatures for restricting the passage of packets within predetermined ranges, signatures of more stringent restriction ranges are provided with higher priority orders, signatures containing restriction information of more stringent band are used with higher priority in controlling the packets, thus enabling packets to be processed securely and without giving rise to inconsistencies in controlling the packets.

With the invention of claim 4, because when a suspicious attacking packet is detected, a suspicious signature is generated and the priority order of the suspicious signature is determined, the suspicious signature generated when the suspicious attacking packet is detected can be provided with the priority order without delay.

With the invention of claim 5, because when a suspicious attacking packet is detected, legitimate signatures are generated and the priority orders of the legitimate signatures are determined, the legitimate signatures generated when the suspicious attacking packet is detected can be provided with the priority orders without delay.

With the invention of claim 6, because when an illegitimate traffic is detected, an illegitimate signature is generated and the priority order of the illegitimate signature is determined, the illegitimate signature generated when the illegitimate traffic is detected can be provided with the priority order without delay.

With the invention of claim 7, because when a suspicious signature is received from another repeater device, the priority order of the suspicious signature is determined, the suspicious signature received from the other repeater device can be provided with the priority order without delay.

With the invention of claim 8, because when legitimacy conditions are received from another repeater device, legitimate signatures are generated and the priority orders of the legitimate signatures are determined, the legitimate signatures generated when the legitimacy conditions are received can be provided with the priority orders without delay.

With the invention of claim 9, because when a signature is received from the network manager, the priority order of the signature is determined, the signature set by the network manager can be provided with the priority order without delay.

### BRIEF DESCRIPTION OF DRAWINGS

Fig. 1 is a schematic for explaining a network attack protection system according to an embodiment of the present invention;
Fig. 2 is a detailed block diagram of a repeater device shown in Fig. 1;
Fig. 3 is a schematic for explaining contents of an suspicious attack detection condition table;
Fig. 4 is a schematic for explaining contents of an illegitimate traffic detection condition table;
Fig. 5 is a schematic for explaining contents of a legitimacy condition table;
Fig. 6 is a schematic for explaining contents of a signature list;
Fig. 7 is a flowchart of a processing procedure for detecting a suspicious attacking packet;
Fig. 8 is a flowchart of a processing procedure for receiving a signature; and
Fig. 9 is a flowchart of a processing procedure for detecting an illegitimate packet.

### EXPLANATIONS OF LETTERS OR NUMERALS

- 10: repeater device
- 11: network interface
- 12: packet detecting unit
- 13: attack detecting unit
- 14: signature communicating unit
- 15: priority order determining unit
- 16: filtering unit
- 17: input unit
- 20: server
- 30: communications terminal
- 100: network attack protection system

### BEST MODE(S) FOR CARRYING OUT THE INVENTION

Exemplary embodiments of a repeater device, a relaying method, a relaying program, and a network attack protection system according to the present invention will now be described in detail with reference to the attached drawings. In the following, the principal terms used in the description of the embodiment, an outline and characteristics of the network attack protection system, the arrangement and processes of the repeater device, and the effects of the embodiment will be described in that order, and lastly, various modification examples of the embodiment will be described.

### EMBODIMENT

### [Description of Terms]

First, the principle terms used in the description of the embodiment will be described. A "suspicious signature," used in the embodiment, is a signature for restricting a packet suspected of being an attack packet (suspicious attacking packet) and is specifically arranged by defining attributes (such as a destination IP address, protocol, destination port No., etc.) that indicate characteristics of the suspicious attacking packet, the passage of which is to be restricted, and restriction details (such as restriction information for restricting the band when a specific packet flows in).

A "legitimate signature," used in the embodiment is a signature for enabling the passage of a legitimate packet (a legitimate packet that is a communication packet of a legitimate user), among packets corresponding to a suspicious signature, that is deemed not to be an attack packet, and is specifically arranged by defining attributes (such as the source IP address, service type, destination IP address, protocol, destination port No., etc.) that indicate characteristics of the legitimate packet, the passage of which is to be enabled.

An "illegitimate signature," used in the embodiment is a signature for restricting an illegitimate packet included among illegitimate traffic (a packet that meets illegitimate traffic conditions), and is specifically arranged by defining the source IP address, etc., of the illegitimate packet.

### [Outline and Characteristics of the System]

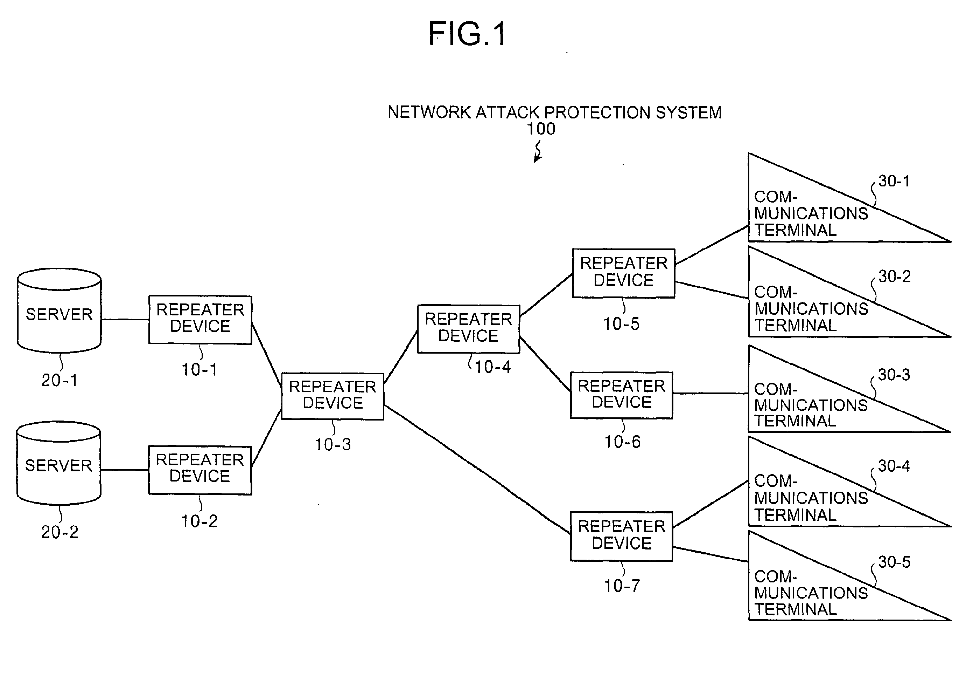

An outline and characteristics of the network attack protection system of the embodiment will now be described using Fig. 1. Fig. 1 is a schematic for explaining the network attack protection system of the embodiment.

The network attack protection system 100 includes a plurality of repeater devices 10 arranged in a network. Servers 20, which are computers subject to DoS attacks and DDoS attacks, and communications terminals 30, which are computers that can carry out the DoS attacks and DDoS attacks, are connected to the network. In the following description, the repeater devices 10 will be referred to as repeater devices 10-1 to repeater devices 10-7 when the repeater devices 10 are to be distinguished respectively, the servers 20 will be referred to as servers 20-1 and server 20-2 when the servers 20 are to be distinguished respectively, and the communications terminals 30 will be referred to as communications terminal 30-1 to communications terminal 30-5 when the communications terminals are to be distinguished respectively.

In the network attack protection system 100, upon detecting that at least one communications terminal 30 among the communications terminals 30 is carrying out a DoS attack or a DDoS attack on a server 20 on the network, a repeater device 10 generates signatures (suspicious signature and illegitimate signature) for restricting the passage of packets and legitimate signatures for enabling the passage of packets. The repeater device 10 then registers the signatures (suspicious signature, illegitimate signature, and legitimate signatures) that it has generated on its own in a signature list.

The repeater device 10 also sends the generated suspicious signature (and the legitimacy conditions used to generate the legitimate signatures) to adjacent repeater devices. Meanwhile, upon receiving a suspicious signature, etc., from an adjacent repeater device, the repeater device 10 generates legitimate signatures based on the legitimacy conditions and registers the received suspicious signature and the generated legitimate signature in the signature list. To cite examples of adjacent repeater devices, in Fig. 1, the adjacent repeater devices of the repeater device 10-3 are the repeater device 10-1, the repeater device 10-2, the repeater device 10-4, and the repeater device 10-7, and the repeater device 10-5 and the repeater device 10-6 are not in an adjacency relationship with respect to the repeater device 10-3. The adjacency relationship does not signify physical adjacency.

The repeater device 10 furthermore receives an instruction for setting signatures (suspicious signatures, illegitimate signatures, and legitimate signatures) from a network manager and registers the signatures relevant to the setting instruction in the signature list, and receives, from the network manager, a modification instruction concerning signatures already registered in the signature list and registers signatures after modification in the signature list. With the present embodiment, a signature that has been registered in the signature list in accordance with the setting instruction or the modification instruction from the network manager is defined as a "set signature," and a signature that the repeater device 10 has generated on its own and has registered in the signature list or a signature that has been received from an adjacent repeater device and has been registered in the signature list is defined as an "automatically generated signature."

The repeater device 10 thus registers suspicious signatures, illegitimate signatures, and legitimate signatures in the signature list. The repeater device 10 then controls the passage of packets based on the signature list. That is, a packet corresponding to an illegitimate signature or a suspicious signature is passed upon restricting the transmission band or is discarded, and a packet corresponding to a legitimate signature or a packet not corresponding to any signature is enabled to pass without restriction of the transmission band.

A major characteristic of the repeater device 10 of the present embodiment is that the signatures registered in the signature list are provided with priority orders. Specifically, in controlling the passage of a packet, the repeater device 10 performs a process of judging whether the packet corresponds to any of the signatures registered in the signature list, and in the present embodiment, a signature is selected in the order of high priority order (priority) from among the signatures registered in the signature list, whether the packet corresponds to the selected signature is judged, and the packet is controlled based on the corresponding signature. Thus even if there are a plurality of signatures, the packets can be processed according to a desired order.

The repeater device 10 is a device that relays packets while protecting against attacks and may function, for example, as a router or a bridge. The repeater device 10 may be connected to a management network for managing the repeater device 10, etc., and the signatures may be sent and received via the management network.

### [Arrangement of the Repeater device]

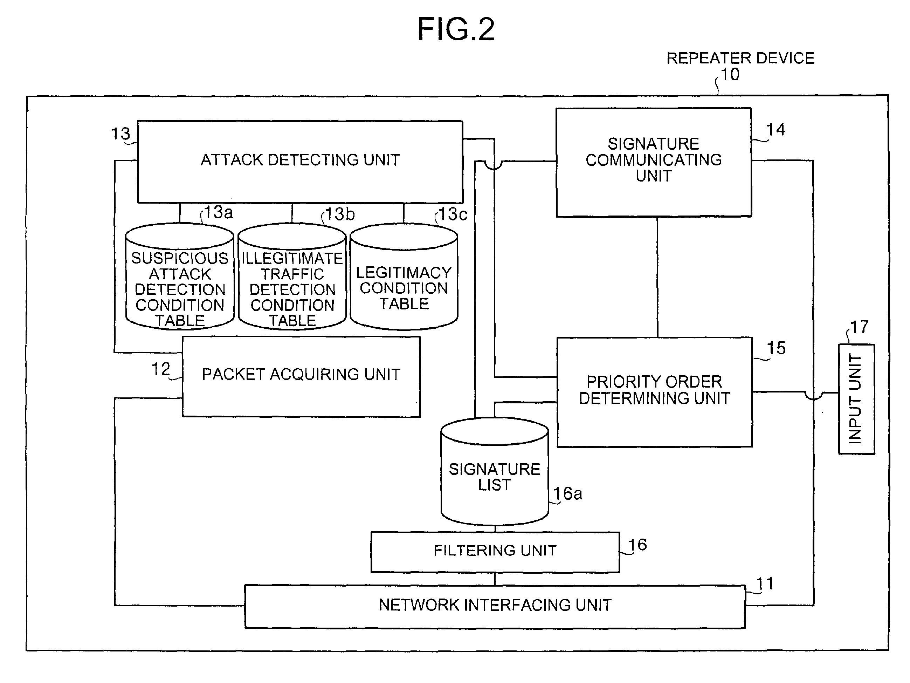

The arrangement of the repeater device 10 shown in Fig. 1 will now be described using Fig. 2. Fig. 2 is a detailed block diagram of the repeater device 10. The repeater device 10 includes a network interfacing unit 11, a packet acquiring unit 12, an attack detecting unit 13 (and an suspicious attack detection condition table 13a, an illegitimate traffic detection condition table 13b, and a legitimacy condition table 13c), a signature communicating unit 14, a priority order determining unit 15, a filtering unit 16 (and a signature list 16a), and an input unit 17.

The repeater device 10 may have a CPU (Central Processing Unit), a memory, a hard disk, etc., and the packet acquiring unit 12, the attack detecting unit 13, the signature communicating unit 14, the priority order determining unit 15, and the filtering unit 16 may be program modules that are processed by the CPU. These program modules may be processed by a single CPU or may be processed dispersedly by a plurality of CPUs. Linux or other general-purpose OS may be installed in the repeater device 10, and a packet filter provided in the general-purpose OS may be made to function as the filtering unit 16.

The attack detecting unit 13 corresponds to being the "suspicious signature generating unit," the "legitimate signature generating unit," and the "illegitimate signature generating unit" indicated in the claims, the signature communicating unit 14 corresponds to being the "signature receiving unit," the priority order determining unit 15 corresponds to being the "priority order determining unit," the filtering unit 16 corresponds to being the "packet controlling unit," the signature list 16a corresponds to being the "signature storage unit," and the input unit 17 corresponds to being the "signature input unit."

In Fig. 2, the network interfacing unit 11 is a unit that sends and receives packets to and from communication equipment connected to the network and is specifically arranged from a network connection card, etc., that is connected to the network, which may be a LAN (Local Area Network), a WAN (Wide Area Network), etc.

The input unit 17 is a unit that receives the input of various information and instructions from the network manager, is arranged from a keyboard, mouse, microphone, etc., and receives and inputs setting instructions, to be described below, for signatures that are to be registered anew in the signature list 16a, modification instructions and deletion instruction for signatures that are already registered, etc. Though not illustrated in Fig. 2, the repeater device 10 may also be arranged with a monitor (or a display or a touch panel), speakers, and other output units that output various information.

The packet acquiring unit 12 is a processing unit that acquires the packet received by the network interfacing unit 11 and presents statistical information concerning the statistics of the acquired packet to the attack detecting unit 13.

The attack detecting unit 13 is a processing unit that performs attack detection and attack analysis based on the statistical information provided by the packet acquiring unit 12 and is connected to the suspicious attack detection condition table 13a, the illegitimate traffic detection condition table 13b, and the legitimacy condition table 13c as shown in Fig. 2. The information stored in the respective tables 13a to 13c will now be described and thereafter the details of the processing by the attack detecting unit 13 will be described.

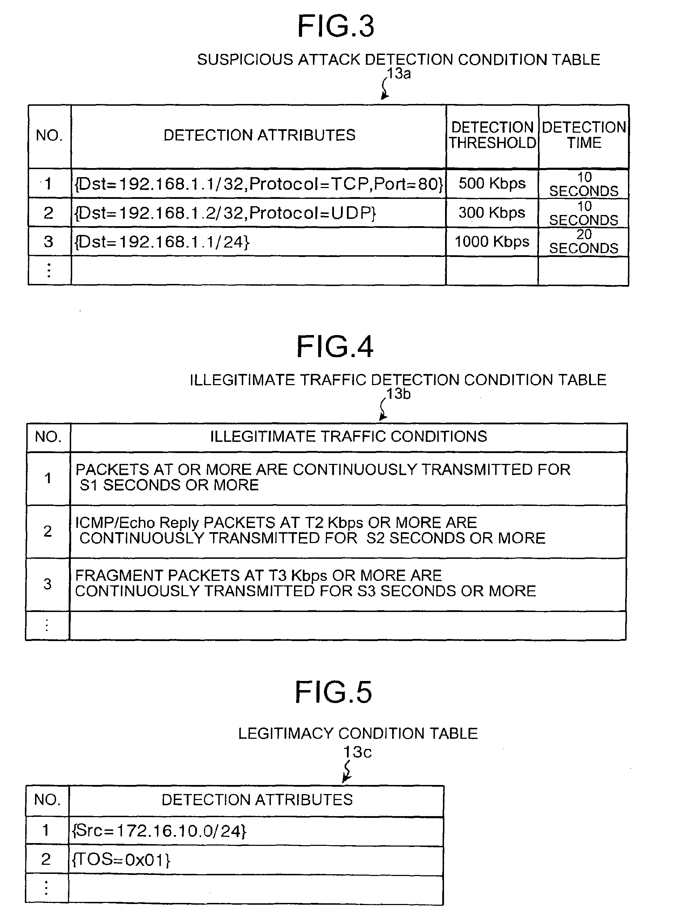

Fig. 3 is a diagram of an example of the information stored in the suspicious attack detection condition table 13a, that is to be more detailed, the "suspicious attack detection conditions" that are used to detect suspicious attacking packets that are received packets that have the possibility of being attack packets. As shown in the figure, the suspicious attack detection conditions are arranged as records of a plurality of sets (three sets in the present example) of combinations of detection attributes, a detection threshold value, and a detection interval, and when a traffic matches the conditions of any record among the respective suspicious attack detection condition records, the communication packet of that traffic is recognized to be a suspicious attacking packet. "No." is used as a matter of convenience for specifying a record.

The attributes of an IP header portion included in an IP packet or the attributes of a TCP header portion or a UDP header portion included in a payload portion of an IP packet are, for example, designated as the "detection attributes" of the suspicious attack detection conditions. Specifically in Fig. 3, the detection attributes of the record of No. 1 are designated by the combination of attribute values in which "Destination IP address" is "192.168.1.1/32" (dst=192.168.1.1/32), "Protocol," which indicates an upper layer (TCP or UDP) protocol type of the IP, is "TCP" (Protocol=TCP), and "Destination Port," which indicates which application the upper layer protocol of the IP is an information of, is "80" (Port=80).

The detection attributes of the record of No. 2 are designated by the combination of attributes values of a "Destination IP address" of "192.168.1.2/32" (dst=192.168.1.2/32) and a "Protocol" of "UDP" (User Datagram Protocol) (Protocol=UDP). Likewise, the detection attribute of the record of No. 3 is designated by the attribute of a "Destination IP Address" of "192.168.1.0/24."

The suspicious attack detection condition of the "detection threshold value" designates the minimum transmission band for detecting the traffic of a received packet with the detection attributes designated by the same record as an attack suspect traffic, and the suspicious attack detection condition of the "detection interval" likewise designates the minimum continuous duration. Though not shown in Fig. 3, a set of attributes values, in which the "Destination IP Address" is unconditional ("any") and the "Protocol," which indicates the upper layer protocol type of the IP, is "ICMP (Internet Control Message Protocol)," may be designated as the detection attributes.

Fig. 4 is a diagram of an example of information stored in the illegitimate traffic detection condition table 13b, that is to be more detailed, the "illegitimate traffic conditions" that are used for detecting illegitimate traffic from the traffic of a suspicious attacking packet. As shown in the figure, the illegitimate traffic conditions are arranged from a plurality of known traffic patterns of DDoS attacks, and when the traffic of a suspicious attacking packet matches any of the traffic patterns, the traffic is recognized to be an illegitimate traffic. "No." is used as a matter of convenience for specifying a record (pattern).

Specifically, the illegitimate traffic conditions of No. 1 indicate a traffic pattern, in which "a packet of a transmission band of no less than T1 Kbps is being sent continuously for no less than S1 seconds." The illegitimate traffic conditions of No. 2 indicate a traffic pattern, in which "an ICMP (Internet Control Message Protocol) echo reply message packet of a transmission band of no less than T2 Kbps is being sent continuously for no less than S2 seconds." The illegitimate traffic conditions of No. 3 indicate a traffic pattern, in which "a fragment packet of a transmission band of no less than T3 Kbps that indicates that the data included in the packet are sent upon being partitioned among a plurality of IP packets due to the data being too long is being sent continuously for no less than S3 seconds."

Fig. 5 is a diagram of an example of information stored in the legitimacy condition table 13c, that is to be more detailed, the "legitimacy conditions" that express packets sent from a communications terminal used by a legitimate user. As shown in the figure, the legitimacy conditions are arranged from records, each of which is a combination of attributes of IP packets and the attribute values. "No." is used as a matter of convenience for specifying a record (pattern).

Specifically, the detection attribute of the record of No. 1 designates that the "Source IP Address" of the IP is "172.16.10.0/24" (src=172.16.10.0/24), and the detection attribute of the record of No. 2 designates that "Type of Service," which indicates the service quality on the IP, is "01 (in hexadecimal notation)" (TOS=Ox01). As such legitimacy conditions, for example, the source IP addresses of servers 20 of branches of a firm of a server owner and related firms that are to be protected and the source IP addresses of a network, which the owner of a LAN that includes servers 20 recognizes as being that of a legitimate user, are set.

Returning now to Fig. 2, when an attack is detected based on the statistical information provided by the packet acquiring unit 12, the attack detecting unit 13 generates a suspicious signature for restricting the communication packet (suspicious attacking packet) of the attack suspect traffic. Specifically, in accordance with the suspicious attack detection conditions shown in Fig. 3, the attack detecting unit 13 checks for traffic that continues for a longer duration than that designated by the detection interval, uses a transmission band that is no less than that designated by the detection threshold value, and matches the detection attributes, and when a traffic is found to match any of the records, the traffic is detected as an attack suspect traffic, and the suspicious signature is generated from the detection attributes of the suspicious attack detection condition record that the detected attack suspect traffic matches.

Also, when an attack is detected, the attack detecting unit 13 generates legitimate signatures along with the suspicious signature. Specifically, the legitimacy conditions shown in Fig. 5 are referenced, and the legitimate signatures are generated by subjecting each of the legitimacy condition records to an AND operation with the suspicious signature. These legitimacy signatures are used to release legitimate packets, which are communication packets of legitimate users, from the restriction by the suspicious signature, and with the example of Figs. 3 and 5, the suspicious signature of a packet detected by the conditions of the record of No. 1 in Fig. 3 is "dst=192.168.1.1/32, Protocol=TCP, Port=80," and in Fig. 5, the legitimate signatures are "src=172.16.10.24, dst=192.168.1.1/32, Protocol=TCP, Port=80," and "TOS=0x01, dst=192.168.1.1/32, Protocol=TCP, Port=80."

Furthermore, when a traffic matching any of the patterns among the illegitimate traffic conditions shown in Fig. 4 is detected, the attack detecting unit 13 generates an illegitimate signature for restricting illegitimate traffic. Specifically, the source IP address of a packet that meets the detected illegitimate traffic conditions is specified as an illegitimate address range, and the conditions of being in the illegitimate address range and matching the suspicious signature are generated in the form of the illegitimate signature.

The suspicious signature, legitimate signatures, and illegitimate signature generated by the attack detecting unit 13 are registered in the signature list 16a by a process of the priority order determining unit 15 to be described later. Besides the signatures generated by the attack detecting unit 13, the signatures (suspicious signatures, legitimate signatures, and illegitimate signatures) registered in the signature list 16a include signatures received from adjacent repeater devices via the signature communicating unit 14 to be described later and signatures (newly set signatures and modified signatures) input from the network manager via the input unit 17.

In Fig. 2, the signature communicating unit 14 is a processing unit that sends the signatures generated by the attack detecting unit 13, etc., to adjacent repeater devices and receives signatures sent from adjacent repeater devices.

The priority order determining unit 15 is a processing unit that determines priority orders of the signatures registered in the signature list 16a to be described below (the signatures received by the signature communicating unit 14, the signatures generated by the attack detecting unit 13, and the signatures set via the input unit 17 by the network manager). That is, the signature list 16a that expresses the results of determining the priority orders is prepared and the prepared signature list 16a is registered in the filtering unit 16. The signatures contain restriction information for performing band restriction when a specific packet flows in.

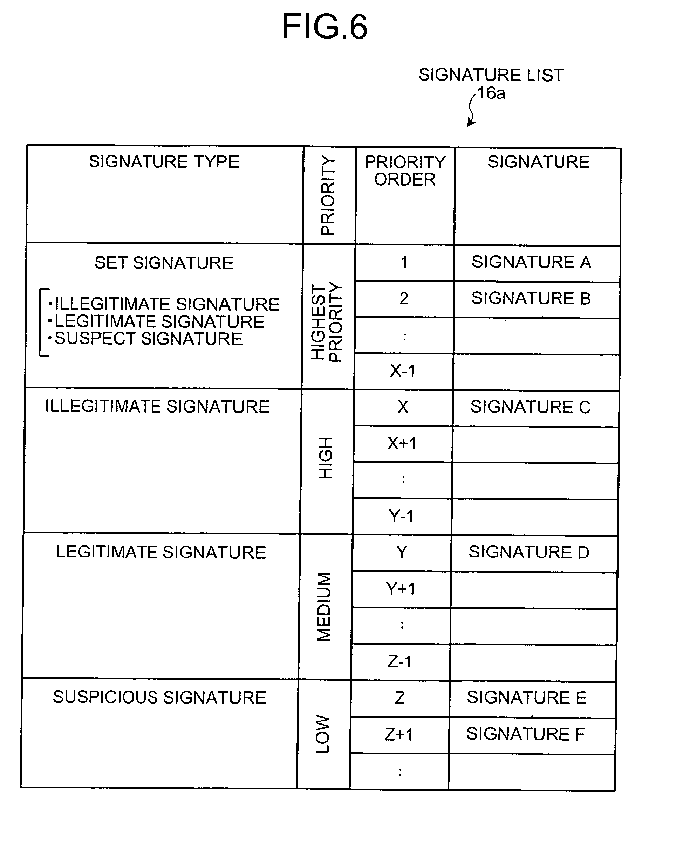

The signature list 16a will now be described using Fig. 6. Fig. 6 is a diagram of an example of the information stored in the signature list 16a. As shown in the figure, in terms of type, the signatures can be classified into the set signatures, which are set by the network manager, and the automatically generated signatures, which are automatically generated by the repeater device 10 (the signatures received by the signature communicating unit 14 and the signatures generated by the attack detecting unit 13), and each signature can also be classified as being an illegitimate signature for restricting illegitimate packets, a legitimate signature for allowing valid packets, and a suspicious signature for restricting suspicious attacking packets.

Also, as shown in the figure, in the present embodiment, the priority order determining unit 15 determines the priority orders of the signatures registered in the signature list 16a so that the "set signatures" will be higher in priority than the "automatically generated signatures" that are generated automatically. Furthermore, as shown in the figure, the priority order determining unit 15 determines the priority orders of the signatures registered in the signature list 16a so that the "illegitimate signatures" will be higher in priority than the "legitimate signatures" and the "suspicious signatures" and so that the "legitimate signatures" will be higher in priority than the "suspicious signatures." Specifically, with the example of Fig. 6, the smaller the value of the priority order associated with a signature, the higher the priority of the signature, and the priority decreases in the order of the set signatures (signature A and signature B), the illegitimate signatures (signature C), the legitimate signatures (signature D), and the suspicious signatures (signature E and signature F).

When there are a plurality of signatures of the same type, as in the signature E and the signature F shown in Fig. 6, the priority order determining unit 15 determines the priority orders in accordance with the contents of the restriction information contained in each signature. To give a specific example, the priority of a signature is made higher the lower the restriction band (the restriction band that allows the passage of packets within the restriction band) of the signature.

Also, for a plurality of signatures of the same type (for example, legitimate signatures that do not contain restriction information), the priority order determining unit 15 may be made to increase the priority according to the order of input into the signature list 16a. The priority may also be increased according to the order of input into the signature list 16a when signatures of the same type have the same restriction band.

Thus, based on the types, restriction bands, etc., of the signatures, the priority order determining unit 15 determines the priority orders of the signatures received by the signature communicating unit 14, the signatures generated by the attack detecting unit 13, and the signatures set via the input unit 17 by the network manger. The priority order determining unit 15 then registers the signatures thus provided with the priority orders in the signature list 16a.

In Fig. 2, the filtering unit 16 is a processing unit that receives packets received by the network interfacing unit 11 and controls the passage of the packets (the output of the packets from the network interfacing unit 11) based on the signature list 16a. Specifically, the filtering unit 16 performs a process of judging whether an input packet corresponds (or does not correspond) to any of the "illegitimate signatures," the "legitimate signatures," and the "suspicious signatures" registered in the signature list 16a, and to be more detailed, selects a signature in the order of high priority order (priority) from among the signatures registered in the signature list 16a and judges whether the input packet corresponds to the selected signature. With the example shown in Fig. 6, signatures are selected in the order of the signature A to the signature F.

If the input packet meets the conditions of a signature selected in accordance with priority, the filtering unit 16 controls the passage of the packet based on the contents of the selected signature by inputting the packet into a predetermined cue to be described later or discarding the packet, and after this control, processes are not performed on signatures that are lower in priority than the signature used in the control. That is for example, if the input packet does not meet the conditions of the signature A nor those of the signature B but meets the conditions of the signature C, the filtering unit 16 inputs the packet into a predetermined cue or performs a process for an illegitimate signature, such as discarding, based on the signature C, and for the packet thus controlled, processes are not performed using the signature D to the signature F, which are signatures of lower priority order than the signature C.

To describe the cue, the filtering unit 16 inputs packets corresponding to illegitimate signatures into an illegitimate cue for processing illegitimate packets, inputs packets corresponding to suspicious signatures into a suspect cue for suspect users, and inputs packets corresponding to legitimate signatures or not corresponding to any of the signatures into a legitimate cue for legitimate users. The filtering unit 16 then outputs the packets, which were input into the legitimate cue, from the network interfacing unit 11 without restriction of the transmission band, and restrictingly outputs the packets, which were input in the suspect cue and the illegitimate cue, in accordance with the transmission band restriction values indicated by the respective signatures (the signatures that had been selected as those for which the conditions were met).

When the detection attributes, etc., of a signature registered in the signature list 16a meets predetermined cancellation criteria, the filtering unit cancels the signature that meets the predetermined cancellation criteria and stops the process of controlling the passage of packets based on the cancelled signature.

### [Process Performed When a suspicious attacking packet is Detected]

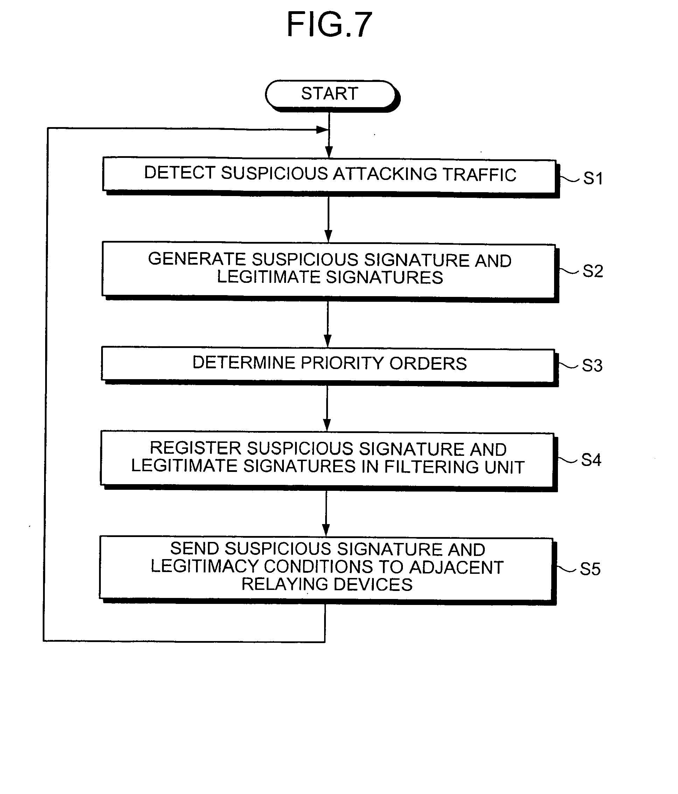

The operation process performed when the repeater device 10 detects a suspicious attacking packet will now be described with reference to Fig. 7. Fig. 7 is a flowchart of the processing procedure performed when a suspicious attacking packet is detected.

As shown in the figure, when the attack detecting unit 13 of the repeater device 10 detects an attack suspect traffic based on the suspicious attack detection condition table 13a shown in Fig. 3 (step S1), the attack detecting unit 13 generates a suspicious signature and legitimate signatures (step S2). The priority order determining unit 15 then receives the suspicious signature and the legitimate signatures, which were generated by the attack detecting unit 13, and determines the priority orders of the signatures (step S3).

Specifically, the priority order determining unit 15 determines the priority order of a legitimate signature to be higher than that of a suspicious signature, and if there are a plurality of signatures of the suspicious signature type, determines the priority order of a signature to be higher the lower the band of the restriction information contained in the signature. The priority orders of the suspicious signature and the legitimate signatures generated by the attack detecting unit 13 are furthermore determined so that the priority orders of the set signatures that are already registered in the signature list 16a will be higher.

Thereafter, the priority order determining unit 15 prepares the signature list 16a that expresses the result of determining the priority orders and registers the prepared signature list 16a in the filtering unit 16 (step S4). The signature communicating unit 14 then sends the signature, etc., (in the present embodiment, the suspicious signature and the legitimacy conditions), generated by the attack detecting unit 13, to adjacent repeater devices (step S5). The priority order determining unit 15 determines the priority orders not only when an attack suspect traffic is detected but also in likewise manner when the signature communicating unit 14 receives a signature from another repeater device 10 and when a signature is input by the network manager.

### [Processes Performed When a Signature is Received]

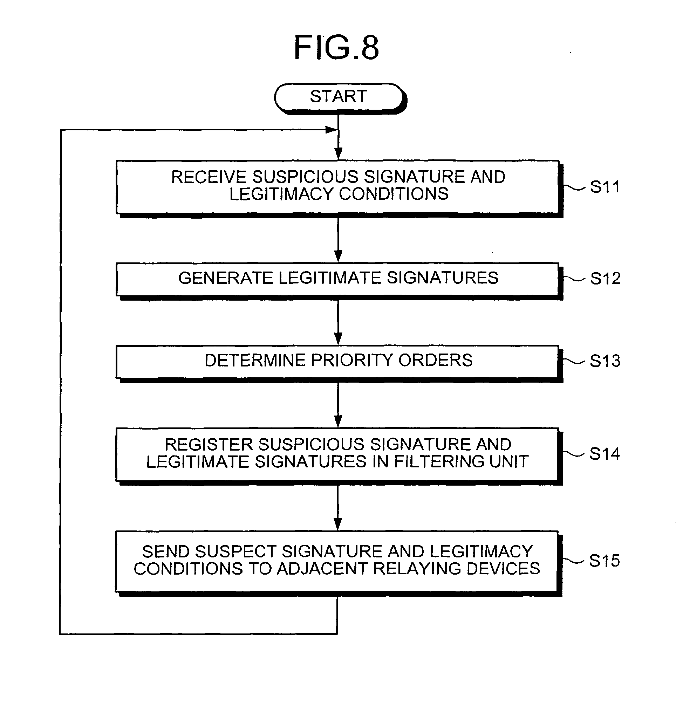

The operation process performed when a signature is received by the repeater device 10 will now be described with reference to Fig. 8. Fig. 8 is a flowchart of the processing procedure performed when a signature is received.

As shown in the figure, when the signature communicating unit 14 of the repeater device 10 receives a signature, etc., (in the present embodiment, a suspicious signature and legitimacy conditions) that are sent from an adjacent repeater device (step S11), the attack detecting unit 13 generates legitimate signatures based on the legitimacy conditions received by the signature communicating unit 14 (step S12).

The priority order determining unit 15 then receives the suspicious signature received by the signature communicating unit 14 and the legitimate signatures generated by the attack detecting unit 13 and determines the priority orders of the signatures (step S13). The priority order determining method employed here is the same as that employed when a suspicious attacking packet is detected. That is, the priority order of a legitimate signature is determined to be higher than that of a suspicious signature, and if there are a plurality of signatures of the suspicious signature type, the priority order of a signature is determined to be higher the lower the band of the restriction information contained in the signature. The priority orders of the suspicious signature received from the adjacent repeater device and the legitimate signatures generated by the attack detecting unit 13 are furthermore determined so that the priority orders of the set signatures that are already registered in the signature list 16a will be higher.

Thereafter, the priority order determining unit 15 prepares the signature list 16a that expresses the result of determining the priority orders and registers the prepared signature list 16a in the filtering unit 16 (step S14). The signature communicating unit 14 then sends the signature, etc., received from the adjacent repeater device (in the present embodiment, the received suspicious signature and the legitimacy conditions) to adjacent repeater devices (step S15).

### [Processes Performed When an Illegitimate Packet is Detected]

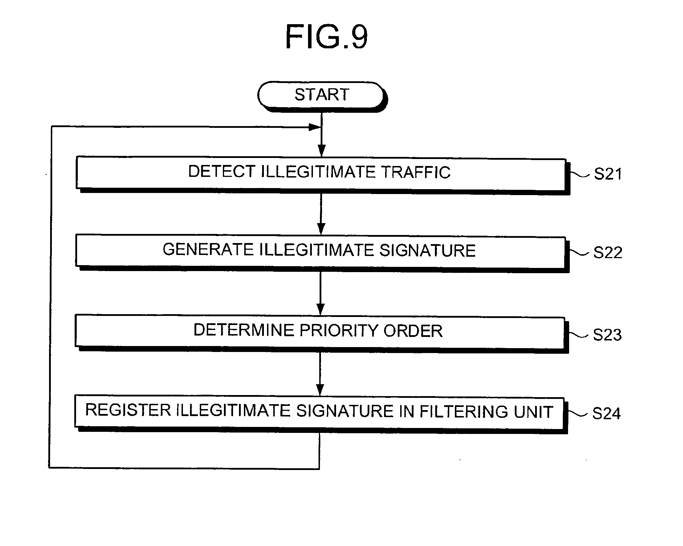

The operation process performed when an illegitimate packet is detected by the repeater device 10 will now be described with reference to Fig. 9. Fig. 9 is a flowchart of the processing procedure performed when an illegitimate packet is detected.

As shown in the figure, when the attack detecting unit 13 of the repeater device 10 detects an illegitimate traffic based on the illegitimate traffic detection condition table 13b shown in Fig. 14 (step S21), the attack detecting unit 13 generates an illegitimate signature (step S22). The priority order determining unit 15 then receives the illegitimate signature generated by the attack detecting unit 13 and determines the priority order of the signature (step S23).

Specifically, the priority order determining unit 15 determines the priority order of the illegitimate signature generated by the attack detecting unit 13 so that the priority orders of the set signatures that are already registered in the signature list 16a will be higher and so that the priority order of the illegitimate signature will be higher than those of the suspicious signatures and the legitimate signatures that are already registered in the signature list 16a. If there are a plurality of signatures of the illegitimate signature type, the priority order of a signature is determined to be higher the lower the band of the restriction information contained in the signature.

Thereafter, the priority order determining unit 15 prepares the signature list 16a that expresses the result of determining the priority order and registers the prepared signature list 16a in the filtering unit 16 (step S24). The priority order determining unit 15 determines the priority orders of signatures set by the network manager in accordance with the priority order determining method described above not only when an attack suspect traffic is detected, when a signature is received from another repeater device 10, and when an illegitimate packet is detected but also when a signature is input by the network manager via the input unit 17.

### [Effects of the Embodiment]

With the embodiment, since priority orders are determined for signatures registered in the signature list 16a, a signature is selected in the order of high priority order, and the passage of a packet is controlled based on the selected signature, packets can be processed according to a desired order when there are a plurality of signatures.

Also, with the embodiment, since set signatures are provided with higher priority orders than automatically generated signatures and the set signatures set by the network manager are thus used with priority in controlling packets, control intended by the network manager can be carried out with priority.

Also, with the embodiment, since with a plurality of signatures for restricting the passage of packets within predetermined ranges, a higher priority order is provided to a signature of more stringent restriction range and a signature, with which the restriction information contained in the signature is more stringent, is used with priority in controlling packets, packets can be processed securely without causing inconsistencies in controlling the packets.

### [Other Embodiments]

Though an embodiment of the present invention was described above, the invention may be carried out in various different modes besides the embodiment.

For example, though with the above embodiment, a case where the priority orders are determined so that "legitimate signatures" will be higher in priority than "suspicious signatures," the present invention is not limited thereto and the priority orders may be determined so that "suspicious signatures" will be higher in priority than "legitimate signatures." That is, the priority order determining method described above with the embodiment is merely an example to which the present invention is not limited, and the invention can be applied in likewise manner to cases where other priority order determining methods are employed.

Though with the embodiment, a case where a "suspicious signature" is always generated when an attack is detected and "legitimate signatures" are generated when the "suspicious signature" is generated or when a "suspicious signature" is received from another repeater device, the present invention is not limited thereto, and "legitimate signatures" may be generated without the generation of a "suspicious signature" or "legitimate signatures" may be generated without the receiving of a "suspicious signature."

The respective components of the respective devices (for example, the repeater devices 10 shown in Fig. 1) illustrated for the embodiment are conceptual functional units and do not necessarily have to be arranged physically as illustrated. That is, the specific form of dispersion or unification of each repeater device 10 is not restricted to that which is illustrated and the entirety or portions of each repeater device 10 may be arranged in a functionally or physically dispersed or unified manner in arbitrary units in accordance with various loads, usage circumstances, etc. All or arbitrary portions of the various processing functions realized in a repeater device 10 may be realized by a CPU and programs that are analyzed and executed by the CPU or as wired logic hardware.

Of the various processes described with the embodiment, all or portions of the processes described as being carried out automatically may be carried out manually, or all or portions of the processes described as being carried out manually may be carried out automatically by known methods. In addition, the processing procedures, control procedures, specific names, and information including various data and parameters (for example, the contents of the suspicious attack detection condition table, the illegitimate traffic detection condition table, and the legitimacy condition table) that were explained in the above text and drawings may be changed as suited unless specifically noted otherwise.

Though with the embodiment, the various devices (for example, the repeater devices 10) for realizing the present invention were described from the functional aspects, the various functions of the respective devices may be realized by making a personal computer, workstation, or other computer execute programs. That is, the various processing procedures described with the first embodiment may be realized by executing programs, prepared in advance, on a computer. These programs may be distributed via the internet or other network. These programs may also be recorded in a computer-readable storage medium, such as a hard disk, flexible disk (FD), CD-ROM, MO, or DVD, and be executed upon being read from the storage medium by the computer. To cite an example, CD-ROMs, each storing a repeater device program such as indicated by the embodiment, may be distributed and the programs stored in the CD-ROMs may be made to be read and executed by computers.

### INDUSTRIAL APPLICABILITY

As described above, the present invention's repeater device, relaying method, relaying program, and network attack protection system are useful for controlling the passage of packets along a network based on signatures for controlling the passage of the packets and are especially suitable for processing packets according to a desired order even when there are a plurality of signatures.

## Claims

1. A repeater device that is arranged in a network and includes a signature storage unit that stores signatures for controlling a passage of packets, and controls the passage of the packets based on the signatures stored in the signature storage unit, comprising:
a priority order determining and providing unit that determines the priority orders of the signatures to be stored in the signature storage unit; and
a packet controlling unit that selects a signature from the signature storage unit in the order of high priority order as determined by the priority order determining unit and controls the passage of the packet based on selected signature.

2. The repeater device according to claim 1, wherein
the signature storage unit stores automatically generated signatures that are generated automatically according to predetermined conditional judgments and set signatures set by a manager of the network, and
the priority order determining unit provides priority orders to the automatically generated signatures and the set signatures to be stored in the signature storage unit with the set signatures being provided with higher priority orders than the automatically generated signatures.

3. The repeater device according to claim 1 or 2, wherein
the signature storage unit stores a plurality of signatures for restricting the passage of the packets within predetermined ranges, and
the priority order determining unit provides priority orders to the signatures to be stored in the signature storage unit with higher priority orders being provided to signatures of more stringent restriction ranges.

4. The repeater device according to claim 1, further comprising:
a suspicious signature generating unit that detects a suspicious attacking packet based on predetermined suspicious attack detection conditions and generates a suspicious signature for restricting the suspicious attacking packet; and
wherein, when a suspicious signature is generated by the suspicious signature generating unit, the priority order determining unit stores the suspicious signature in the signature storage unit upon providing a priority order to the suspicious signature.

5. The repeater device according to claim 1, further comprising:
a legitimate signature generating unit that generates legitimate signatures for enabling valid packets based on predetermined legitimacy conditions; and
wherein, when a legitimate signature is generated by the legitimate signature generating unit, the priority order determining unit stores the legitimate signature in the signature storage unit upon providing a priority order to the legitimate signature.

6. The repeater device according to claim 1, further comprising:
an illegitimate signature generating unit that detects an illegitimate packet based on predetermined illegitimate traffic detection conditions and generates an illegitimate signature for restricting the illegitimate packet; and
wherein, when an illegitimate signature is generated by the illegitimate signature generating unit, the priority order determining unit stores the illegitimate signature in the signature storage unit upon providing a priority order to the illegitimate signature.

7. The repeater device according to claim 1, further comprising:
a signature receiving unit that receives suspicious signatures, for restricting suspicious attacking packets, from other repeater devices; and
wherein, when a suspicious signature is received by the signature generating unit, the priority order determining unit stores the suspicious signature in the signature storage unit upon providing a priority order to the suspicious signature.

8. The repeater device according to claim 1, further comprising:
a legitimate signature generating unit that generates legitimate signatures for enabling valid packets based on predetermined legitimacy conditions received from the other repeater devices; and
wherein, when a legitimate signature is generated by the legitimate signature generating unit, the priority order determining unit stores the legitimate signature in the signature storage unit upon providing a priority order to the legitimate signature.

9. The repeater device according to claim 1, further comprising:
a signature input unit that receives and inputs signatures from a network manager; and
wherein, when a signature is input by the signature input unit, the priority order determining unit stores the signature in the signature storage unit upon providing a priority order to the signature.

10. A network attack protection system that includes a signature storage unit that stores signatures for controlling a passage of packets, and controls the passage of the packets based on the signatures stored in the signature storage unit, comprising:
a priority order determining and providing unit that determines the priority orders of the signatures to be stored in the signature storage unit; and
a packet controlling unit that selects a signature from the signature storage unit in the order of high priority order as determined by the priority order determining unit and controls the passage of the packet based on selected signature.

11. A relaying method realized on a device that is arranged in a network and that includes a signature storage unit that stores signatures for controlling a passage of packets, and controls the passage of the packets based on the signatures stored in the signature storage unit, comprising:
a priority order determining and providing unit step of determining the priority orders of the signatures to be stored in the signature storage unit; and
a packet controlling step of selecting a signature from the signature storage unit in the order of high priority order as determined by the priority order determining unit and controls the passage of the packet based on selected signature.

12. The relaying method according to claim 11, wherein
the signature storage unit stores automatically generated signatures that are generated automatically according to predetermined conditional judgments and set signatures set by a manager of the network, and
the priority order determining step includes providing priority orders to the automatically generated signatures and the set signatures to be stored in the signature storage unit with the set signatures being provided with higher priority orders than the automatically generated signatures.

13. The relaying method according to claim 11 or 12, wherein
the signature storage unit stores a plurality of signatures for restricting the passage of the packets within predetermined ranges, and
the priority order determining step includes providing priority orders to the signatures to be stored in the signature storage unit with higher priority orders being provided to signatures of more stringent restriction ranges.

14. A relaying program that causes a signature storage unit to store signatures for controlling a passage of packets, and controls the passage of the packets based on the signatures stored in the signature storage unit, comprising:
a priority order determining and providing unit process of determining the priority orders of the signatures to be stored in the signature storage unit; and
a packet controlling process of selecting a signature from the signature storage unit in the order of high priority order as determined by the priority order determining unit and controls the passage of the packet based on selected signature.

15. The relaying program according to claim 14, wherein
the signature storage unit stores automatically generated signatures that are generated automatically according to predetermined conditional judgments and set signatures set by a manager of the network, and
the priority order determining step includes providing priority orders to the automatically generated signatures and the set signatures to be stored in the signature storage unit with the set signatures being provided with higher priority orders than the automatically generated signatures.

16. The relaying program according to claim 14 or 15, wherein
the signature storage unit stores a plurality of signatures for restricting the passage of the packets within predetermined ranges, and
the priority order determining step includes providing priority orders to the signatures to be stored in the signature storage unit with higher priority orders being provided to signatures of more stringent restriction ranges.
